Europäisches Patentamt

European Patent Office

Office européen des brevets

(11) Publication number: **0 241 602**
**A1**

# (12) EUROPEAN PATENT APPLICATION

(21) Application number: **86200652.5**

(22) Date of filing: **16.04.86**

(51) Int. Cl.⁴: **C02F 3/28**

(43) Date of publication of application:
**21.10.87 Bulletin 87/43**

(84) Designated Contracting States:
**NL**

(71) Applicant: **GIST-BROCADES N.V.**
**Wateringseweg 1**
**NL-2611 XT Delft(NL)**

(72) Inventor: **Mulder, Arnold**
**Kluutring 27**
**NL-2623 NM Delft(NL)**
Inventor: **Heijnen, Joseph Johannes**
**Statenlaan 25**
**NL-5121 HA Rijen(NL)**

(74) Representative: **Huygens, Arthur Victor, Dr. et al**
**c/o Gist-Brocades N.V. Patent & Trademarks Department Martinus Nijhofflaan 2 PO Box 1 NL-2600 MA Delft(NL)**

(54) Anaerobic purification of wastewater, containing sulphate and organic material.

(57) Wastewater containing sulphate and organic material is treated in a two-step anaerobic biological plant, in two fluidized bed reactors. In the first reactor (1) (acidification stage) at least 80% of sulphates are reduced to hydrogen sulphide which is then removed for at least 70% in a gas stripper (13) by a purge gas (12). The effluent from the stripper (13) is then digested in the second (methanic) reactor (22).

fig. 1

## Anaerobic purification of wastewater, containing sulphate and organic material

This invention relates to a process for the purification of wastewater containing sulphate and organic material by anaerobic wastewater treatment.

During anaerobic wastewater treatment sulphate, if present, will be reduced for the major part into hydrogen sulphide. In most cases this causes nuisance: a decrease or even complete inhibition of the methanogenic capacity of the sludge and the production of a malodorous effluent. The possibilities to inhibit the sulphate reduction are questionable.

Therefore the application of anaerobic purification technologies in concentrated wastewaters is often limited by the high concentrations of $SO_4^{2-}$. Examples are the vinasses of fermentation processes such as alcohol, lactic acid, citric acid, penicillin. In such cases, $SO_4^{2-}$-concentrations of up to 4 g/l may occur (= 1330 mg S/l).

However, the application of anaerobic purification in this field is highly attractive, owing to the very high amounts of COD involved. Typical cases are COD-loads of 10-60 ton/day, leading to purification reactors of considerable investment.

The alternative route used in the majority of cases to handle these concentrated wastes is further concentration to a slurry that can be sold as a fodder additive. It appeared, however, that in many cases the fodder market is not sufficiently large to serve as an outlet for this slurry.

Another route is to use it for the irrigation/fertilization of agricultural land, but here again there are limits to the amount that can be applied per hectare.

Owing to these problems, and because of the $CH_4$-production, anaerobic purification has become increasingly important in case of these types of wastewaters. However, the high level of $SO_4^{2-}$ concentration appeared to be a major obstacle.

A general possibility to circumvent the mentioned problems of the presence of $SO_4^{2-}$ in wastewater is to pursue the complete reduction to $H_2S$ of the $SO_4^{2-}$ and to remove continuously this $H_2S$ from the water to alleviate its toxic effect on methanogenesis.

French patent application FR 2484990 discloses the continuous purification of sulphate-containing wastewater by treatment with anaerobic methanogenic bacteria and the removal of sulphides formed from the sulphates using a stripping gas. The elimination of the sulphides is carried out in an external gas stripper. The sulphate containing wastewater is purified in an anaerobic wastewater reaction space wherein at the same time the acidification and methanisation takes place.

To keep the acidification and methanisation working, the sulphide concentration is kept below 0.1 g/l in the reaction space. Therefore the ratio of feed of this reaction space is chosen to be 0.5 to 0.02 times the liquid feed to the gas stripper.

In British Patent Application GB 2143810 a process is shown wherein primary sulphur oxide-containing wastes, for example gypsum ($CaSO_4$) are biologically converted.

The process of this application is carried out in an anaerobic reactor with suspended growth biomass. Preferably a continuous upflow expanded bed reactor or a fixed film reactor is used. Although it is suggested that the conversion rate in this process will be from about 8 to about 32 kg/m³ of reactor space per day in the examples the average conversion rate was 1 kg $SO_4$/m³ of space per day at most. The hydraulic velocity in the reactor is chosen to be about 1.2-2.4 m/h. However applying this hydraulic liquid velocity in combination with the applied retention time of one day results in very wide reactor designs, which are economically unattractive for industrial application. The pH in the process of British application GB 2143810 remains in the range of 7.0 and 8.0, regardless of the pH of the influent. The stripping of hydrogen sulphide is in those pH ranges unfavourable, the higher the pH the worser the efficiency of the gas-stripper.

As a result of extensive research and experimentation a new process has now surprisingly been found which is especially suitable for the purification of sulphate containing wastewater. The $SO_4^{2-}$-reduction capacity in the present invention is far greater then hitherto thought to be possible (up to 30 kg $SO_4^{2-}$/m³ reactor per day).

According to the present invention at least 80 percent of the sulphate is converted into hydrogen sulphide in an acidification process and at least 70 percent of the formed sulphides are removed.

The acidification stage of a 2-stage anaerobic purification process is advantageously used.

The optimization of the sulphate conversion in the acidification stage of a two stage anaerobic digestion and the removal of hydrogen sulphide from the acidified wastewater will prevent the inhibition of the methane fermentation by hydrogen sulphide, which will benefit the methane fermentation.

2

Moreover the effluent leaving the acidification stage contains minimal amounts of sulphates and sulphides, the biogas formed in the methane fermentation stage will as a result of this process contain only minimal amounts of hydrogen sulphides.

The collected hydrogen sulphide from the acidification may be converted into a product with preferably an economical value such as sulphur, NaHS-solute, $SO_2$ and $SO_3$ and/or $H_2SO_4$ (for example $H_2SO_4$ with a concentration of 20%).

The simultaneous acidification and sulphate reduction may be achieved in conventional and well-established anaerobic reactors.

It will be appreciated by everyone skilled in the art that any suitable reactor can be used in the present process such as a UASB reactor, a fluidized-bed reactor, an anaerobic filter or a down-flow stationary fixed film process. In such processes, if internal gas stripping takes place, sometimes the efficiency in keeping the acidifying biomass inside the reactor, because of the gas present in the system, has to be watched.

When the gas stripping device situated outside the reactor in an external gas stripping device, similarly the conditions in the process has to be chosen to achieve that a high liquid recirculation over the gas stripper is possible in case of high sulphate conversions. For example when the sulphate concentration in the influent amounts to 1000 mg S/l the recirculation ratio has to be chosen to keep below a desired sulphide concentration in the anaerobic reaction space.

Therefore, in the preferred embodiment of the invention fluidized bed reactors are used for the simultaneous acidification and sulphate reduction. Advantageously superficial liquid velocities of 5-30 m/h are applied in this reactor. In the fluidized bed reactor a carrier is used having a diameter smaller than 3 mm, preferably smaller than 1 mm, the density of the carrier is at least 1200 kg/m$^3$, preferably 1500-4000 kg/m$^3$ and the mean concentration of the carrier under process conditions in the reactor is preferably smaller than 400 kg/m$^3$ reactor volume, for example river gravel, silver sand, eiffel-lava are used as suitable carriers.

In a preferred embodiment of the invention the formed sulphides are removed using a purge gas. In another preferred embodiment of the invention the formed sulphides are removed by creating a subatmospheric pressure above the reaction liquid. Under reaction liquid is understood the liquid in the acidification process and/or the liquid in the optional gas stripping device, situated external the acidification process.

In a gas-lift fluidized bed reactor the purge gas may be used to obtain the gas lift in the reaction space for internal gas stripping.

In still another preferred embodiment of the invention a fluidized bed reactor with an external gas stripping device is used. The external gas stripping device gives the possibility of obtaining more independent process parameters.

Using a purge gas in the stripping device, gas strippers known per se or which are easy to design by the skilled person in the art, are suitably used. Using a subatmospheric pressure above the liquid in the gas stripping device, all kinds of dissolved gasses will escape from the liquid for example $H_2S$, $CO_2$, $CH_4$, etc. An advantage of this method is that the $H_2S$ is concentrated in the gas leaving the gas stripping device, while the methane formed in the methanization stage is substantially free of $H_2S$. These gasses from the external gas stripping device are removed optionally together with the gas formed in the acidification.

In all these embodiments it is important to know the maximum sulphide level that may be maintained in the reactor without inhibition of the acidification. As is shown by R. L. Starkey in "Sulphate-reducing bacteria-physiology and practical significance", University of Maryland (1960) the sulphate reducers can tolerate sulphide concentrations up to 2000 mg S/l, corresponding with the reduction of 6 g SO$_4$/l. Their growth is most rapid at reactions close to neutrality but the limiting conditions are about pH 5.5-9.0.

During the experimentation it was found that in this pH region the required reactor volume will decrease with an increasing pH, while on the other hand the purge gas flow which is necessary to achieve the allowable sulphide concentrations will decrease with lower pH values. It was found during experimentation that the pH in the acidification process is advantageously chosen between 5-8, the temperature in the acidification process being 25-45°C. Preferably the pH is maintained between 6-7 in the acidification process.

Preferably the sulphide content in the acidification reactor under such reaction conditions must be lower than about 200 mg S/l.

The sulphate reduction and the stripping of hydrogen sulphide produces an increase of the pH. For example an increase of the pH with 1-2 units is observed when wastewater having a sulphate concentration of 4000 mg/l is used. Therefore the pH has to be controlled, for example by adding acid to wastewater. Another possibility may be the application of a purge gas containing carbon dioxide, preferably biogas containing carbon dioxide, which will reduce or even prevent this acid consumption.

Preferably at least 80% of the hydrogen sulphide is stripped by the purge gas. The purge gas then contains suitably at least 0.5% (v/v) of hydrogen sulphide, preferably about 2-5% (v/v) of hydrogen sulphide.

The acidification efficiency is calculated as:

$$\text{acidification efficiency} = \frac{COD_{\text{sum value of the effluent VFA*}}}{COD_{\text{centrifuged effluent acidification}}} \times 100\%$$

\* VFA = Volatile Fatty Acids

Preferably such conditions are determined that the acidification efficiency of the effluent will have a value of at least 40%. Typical acidification percentages are 45-70% depending on the kind of wastewater to be purified.

For example with space loadings of the acidification of 50 kg COD $m^3$.day and an overall efficiency of about 60%, the conversion capacities will be 30 kg COD/$m^3$.day.

The sulphate reduction capacity in the fluidized bed acidification stage will increase rapidly in the first few days after the introduction of the necessary microorganisms. For example after inoculation with suitable sludge originating from a wastewater treatment process the sulphate reduction increased until nearly 100% within two weeks in a fluidized-bed process, wherein wastewater with a sulphate level of 1500 mg/l was treated.

The effluent of the acidification stage of the present process is preferably treated in a methanation stage.

It will be appreciated by everyone skilled in the art that any suitable methane fermentation reactor can be used succeeding to the present process, such as a UASB reactor, a fluidized-bed reactor, an anaerobic filter or a down-flow stationary fixed film process.

The invention will be illustrated by the following examples in conjunction with the accompanying Figure without restricting the scope of the present invention to this examples.

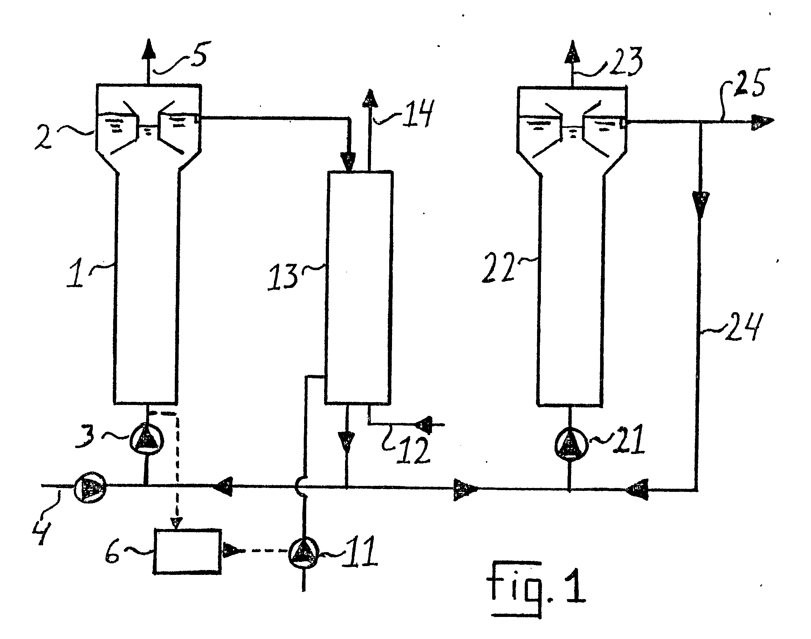

Figure 1 shows schematically an embodiment of the process of the present invention in which an external gas stripper is used.

## Example 1

The flow sheet of the experimental system is shown in Figure 1. The experiments were performed in a fluidized bed reactor (1) with a total volume of 1000 ml. The reactor volume without the settler (2) has been 820 ml. As carrier material for the biomass sand with a diameter of 0.25-0.4 mm has been used. The reactor was inoculated with 50 ml sludge from a pilot-plant acidifying fluidized bed reactor. The internal diameter of the reactor has been 4 cm, the height 48 cm. The superficial liquid velocity was about 15 m/h. This was achieved by a peristaltic tubing pump (3). The hydraulic retention time in the reactor was adjusted at about 4 h. The methane fluidized bed reactor (22) has been identical. The reactors have been placed in a thermostatic controlled case. The temperatures in the reactors have been adjusted to a temperature of 35 ± 1 °C (acidification stage) and 32 ± 1 °C (methanization stage).

The hydrogen sulphide was stripped with a purge gas (12) consisting of technical $N_2$-gas in a gas stripper (13) with a diameter of 4.5 cm and a volume of 0.47 l. The nitrogen was distributed by means of a tube of sintered glass.

The ratio purge gas flow / influent wastewater flow has adjusted about 25 ± 5, in the gas stripper itself the ratio purge gas flow / recirculation flow is about 0.3.

The wastewater consisted of diluted yeast wastewater with a COD 10-14 g/l.

The sulphate additions have been 0.4 ml 36N $H_2SO_4$/l influent and 1.24 g $K_2SO_4$ /l influent, corresponding with 14.4 meq acid/l and resulting in a sulphate concentration of 1.5 g/l. Further have been added 5 ppm $Fe^{++}$ and 4 ppm phosphate ($PO_4^{3-}$).

The different analyses were preformed in grab samples. VFA, COD and sulphate were determined on supernatant samples prepared by centrifugation at 15000 RPM for 10 minutes. The COD mixed samples were collected from the overflow through the tube system.

During the experiment the pH was adjusted (6) only by the addition (11) of sulphuric acid to the influent. This additional supply of sulphuric acid above the addition of 14.4 meq acid/l to the wastewater is necessary to repress the pH increase which is attributed primarily to the sulphate reduction process (see equation 1) in combination with the fact that the wastewater has been buffered weakly.

$$SO_4^{2-} + H^+ + 4H_2 \rightarrow HS^- + 4H_2O \quad (1)$$

Hydrogen sulphide is a weak acid and will act as a buffer. For bisulphide (see equation 2) the maximum buffer index is obtained at pH = pKa = 7.

$$H^+ + HS^- \rightleftharpoons H_2S \quad pKa = 7 \quad (2)$$

For those reasons the reduction of 1.5 g $SO_4$/l will increase the alkalinity with about 15 meq/l.

After the inoculation the sulphate reduction increased in about ten days to a level of nearly 100%. About 82-92% of the produced $H_2S$ has been stripped in the gas stripper.

The space loading of the acidification has been about 66 kg $COD/m^3$.day based on the reactor volume of 1 l. The average of the flow rate has been 0.25 1/h and the influent concentration 11 g COD/l. The overall efficiency is about 67% and the conversion capacity has been 44 kg $COD/m^3$.day.

The sludge conversion capacity for volatile fatty acids came to 4 kg COD/kg VSS.day. When the combined sulphate reduction and acidification process has reached a steady state the end product is mainly acetic acid.

The methane fermentation which occurred partly in the acidification stage and the removal of hydrogen sulphide by the purge gas are both resulting in a COD removal in the combined sulphate reduction and acidification process. The biogas production has been substantial according with a COD removal of 900-1400 mg COD/l. The sulphate conversion capacity has been about 8.1 kg/$SO_4$/$m^3$.day.

### Example 2

In the experiment of example 1 the sulphate concentration of the influent was increased to a value of 4.3 g $SO_4$/l. Moreover 1000 mg/l of propionic acid was added to the influent. Other conditions were maintained as in Example 1 except for changes mentioned lateron.

After a period the process did run steady while 4.0 g $SO_4$/l was reduced. The sulphate reduction capacity has been 21 kg $SO_4$.$m^3$.day (based on the volume of reactor and a flow rate of 0.25 l/h), corresponding with the conversion of 13.9 kg $COD/m^3$.day. The sludge conversion capacity was about 2 kg $SO_4$/kg VSS.day.

The space loading of the acidification has been 84 kg $COD/m^3$.day based on the reactor volume of 1 l and an hydraulic retention time of about 4 h. The average of the flow rate has been 0.25 l/h and the influent concentration 14 g COD/l. When the overall efficiency is about 67% the conversion capacities have been 56 kg $COD/m^3$.day.

The sludge acidification capacity for volatile fatty acids came to 6 kg COD/kg VSS.day. When the combined sulphate reduction and acidification process had reached a steady state the end product was mainly acetic acid.

About 1.5-2 g $H_2S$-COD/l wastewater was removed by stripping. In addition with the production of 1.4 g biomass COD/l wastewater this resulted in a COD reduction (centrifuged effluent samples) of about 3 g COD/l.

At least 85% of the produced $H_2S$ has been stripped by the purge gas. The $H_2S$ content of the purge gas (14) after leaving the gas stripper was 2-5%.

The sulphate reduction and the stripping of hydrogen sulphide produced an increase of the pH with 1-2 units. The control of the pH to repress this increase to a value of 6.7 required about 5 meq acid/g COD.

The effluent of the acidification was connected with the recirculation (24) of the methane fluidized bed reactor (22) (see figure 1). The methane reactor has been started with about 600 ml sludge from a full-stage methanization fluid bed process, supplied with 200 g sand of 0.2-0.4 mm and 50 g of 0.8-1.25 mm. The gas production (23) increased in ten days until a conversion capacity of about 14 kg $COD/m^3$.day (graph 10). The VFA were converted in that period with an efficiency of 90%, and the overall (acidification + methanization) COD-removal efficiency was 60%. The overall reactor loading has been about 41 kg $COD/m^3$.day and the conversion was 24 kg $COD/m^3$.day.

Example 3

In an experiment industrial soybean wastewater enriched with 3700 mg/l sulphate was used. Experimental conditions were maintained as in Example 1 except for the methane reactor where in this experiment a UASB-reactor (UASB = upflow anaerobic sludge blanket) was applied and for the support material in the fluidized-bed acidification reactor, lava of 0.2-0.3 mm has been used as a carrier.

After a period the process ran steady while 2.8 g $SO_4$/l was reduced (75%). The sulphate reduction capacity has been 20 kg $SO_4$/m³.day (based on the volume of the reactor) corresponding with the conversion of 12 kg COD/m³.day. The sludge conversion capacity was about 0.6 k $SO_4$/kg VSS.day.

The space loading of the acidification has been 85 kg COD/m³.day based the reactor volume of 1.0 l and a hydraulic retention time of about 3 h. The average of the flow rate has been 0.3 l/h and the influent concentration 11.4 g COD/l. When the overall efficiency is about 80% the conversion capacity has been 68 kg COD/m³.day.

The sludge conversion capacity for volatile fatty acids came to 2.2 kg COD/kg VSS.day. When the combined sulphate reduction and acidification process had reached a steady state the end product was mainly acetic acid.

At least 70 of the produced $H_2S$ has been stripped by the purge gas. The $H_2S$ content of the purge gas (14) after leaving the gas stripper was 2-3%.

In the combined acidification and sulphate reduction process COD-removal efficiencies of about 34% were achieved. In this example the pH in the acidification stage has been controlled at a value of 6.5.

At the end of the experiment the reactor and stripper contained 32.3 g VSS. The biomass concentration in the reactor was 31.5 g VSS/l while 2% of it was present as suspended solids. The support overgrowth amounts to 110 mg VSS/g support.

The effluent of the acidification / sulphate reduction reactor was connected with the recirculation of the UASB-reactor. The hydraulic retention time in this reactor has been about 9.0 h. The conversion efficiency of the volatile fatty acids was over 90%, the overall soluble COD removal efficiency was 85% and the overall total COD-removal efficiency has been 80%. The reactor loading has been about 15 kg COD/m³.day.

The UASB-reactor has been started with about 1.25 l granular sludge from an industrial scale UASB reactor, used for the purification of effluent from a sugar industry plant. The amount of the inoculated sludge was approximate 100 g dry suspended solids (about 80 g VSS).


**Claims**

1. Process for the purification of wastewater containing sulphate and organic material by anaerobic biological wastewater treatment characterized in that at least 80 percent of the sulphate is converted into hydrogen sulphide in an acidification process and at least 70 percent of the formed sulphides is removed.

2. Process according to claim 1, characterized in that the acidification process takes place in a fluidized bed reactor.

3. Process according to claim 2, characterized in that the superficial liquid velocity in the fluidized bed reactor is 5-30 m/h and a carrier with a diameter smaller than 3 mm is used in the fluidized bed reactor, the density of the carrier being at least 1200 kg/m³.

4. Process according to claim 3, wherein the carrier with a diameter smaller than 1 mm is used, the density of the carrier being 1500-4000 kg/m³ and the mean concentration of the carrier under process conditions in the reactor smaller than 400 kg/m³ reactor volume.

5. Process according to claims 1-4, characterized in that the formed sulphides are removed using a purge gas.

6. Process according to claim 5, characterized in that the purge gas contains carbon dioxide.

7. Process according to claim 6, characterized in that biogas is used as purge gas.

8. Process according to claims 1-4, characterized in that the formed sulphides are removed by creating a subatmospheric above the reaction liquid.

9. Process according to claim 1-8, characterized in that the formed sulphides are removed in a gas stripping device situated outside the acidification process.

10. Process according to claims 1-4, characterized in that the hydraulic retention time in the acidification process is 1-10 hours.

11. Process according to claims 1-4, characterized in that the pH in the acidification process is between 5-8 and that the temperature is 25-45°C.

12. Process according to claim 11, characterized in that the pH in the acidification process is between 6-7.

13. Process according to claims 1-4, characterized in that the sulphide concentration in the acidification process is kept below 200 mg S/l.

7

Fig.1

0 241 602

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,X | GB-A-2 143 810 (DUNCAN LAGNESE)<br><br>* Page 1, lines 1-3; page 2, line 57 - page 4, line 4; page 4, lines 28-35; page 11: "Application D"; page 11, claims 1,2,6,20 * | 1-3,5-7,9,11 | C 02 F 3/28 |
| X | EP-A-0 077 002 (N.V. STUDIEBUREAU O. DE KONINCKS et al.)<br>* Page 21, claims 1,2,5-7,11 * | 1,5,11,12 | |
| D,A | FR-A-2 484 990 (DEGREMONT)<br>* Page 5, claim 1; page 4: "Exemple" * | 1,5,9 | |
| A | EP-A-0 028 846 (GIST-BROCADES)<br>* Page 5, lines 6-13; page 11, table 11 * | 3,4 | TECHNICAL FIELDS SEARCHED (Int. Cl.4)<br><br>C 02 F |
| T | KORRESPONDENZ ABWASSER, vol. 33, no. 10, 1986, pages 928-932, GFA, St. Augustin, DE; T. DONNELLY et al.: "Anaerobe biologische Behandlung von fett- und sulfathaltigen Abwässern der Speisefettraffinerien"<br>* Page 930: "Die mögliche Rolle sulfatreduzierender Bakterien im anaeroben Prozess"; page 932: "Schlussfolgerungen 5" * | 1 | |

The present search report has been drawn up for all claims

| Place of search | Date of completion of the search | Examiner |
|---|---|---|
| THE HAGUE | 12-12-1986 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82